# EUROPÄISCHE PATENTSCHRIFT

(11) **EP 1 949 192 B1**
(45) Veröffentlichungstag und Bekanntmachung des Hinweises auf die Patenterteilung: **04.01.2012**
(21) Anmeldenummer: 06807807.0
(22) Anmeldetag: 10.11.2006
(51) Int. Cl.: G05B 19/05

(54) **SERIELLES BUSSYSTEM, TEILNEHMERVORRICHTUNG UND AN DIE TEILNEHMERVORRICHTUNG ANSCHLIESSBARE EINGABE-/AUSGABEKARTE**
SERIAL BUS SYSTEM, NODE DEVICE AND AN INPUT/OUTPUT CARD THAT CAN BE CONNECTED TO THE NODE DEVICE
SYSTEME DE BUS SERIEL, DISPOSITIF D'ABONNE ET CARTE D'ENTREE/DE SORTIE POUVANT ETRE RACCORDEE AU DISPOSITIF D'ABONNE

(30) Priorität: 14.11.2005 DE 102005054202
(43) Veröffentlichungstag der Anmeldung: 30.07.2008
(73) Patentinhaber: SIEMENS AKTIENGESELLSCHAFT, 80333 München (DE)
(72) Erfinder: SCHOTT, Gerhard, 91334 Hemhofen (DE)
(86) Internationale Anmeldenummer: PCT/EP2006/068355
(87) Internationale Veröffentlichungsnummer: WO 2007/054567

(56) Entgegenhaltungen:
- EP-A- 1 400 882
- WO-A-2005/050894
- DE-U1- 20 022 210
- US-A1- 2003 014 535
- US-B1- 6 891 849

## Beschreibung

### Gebiet der Erfindung

Die Erfindung betrifft serielle Bussysteme, insbesondere Profibus- oder Profinet-Systeme. Weiterhin betrifft die Erfindung Teilnehmervorrichtungen solcher Bussysteme sowie Eingabe-/Ausgabekarten, die an derartige Teilnehmervorrichtungen anschließbar sind.

### Stand der Technik

Die WO 2005/050894 offenbart eine Teilnehmervorrichtung eines seriellen Bussystems mit einer Rückwandplatine, die Datenleitungen für den Anschluss der Teilnehmervorrichtung an eine vordere und eine hintere Teilnehmervorrichtung im seriellen Bussystem und Steckplätze für Eingabe-/Ausgabekarten aufweist.

Serielle Bussysteme verfügen mitunter über einen eingeschränkten Adressbereich, so dass mit den verfügbaren Adressen gehaushaltet werden muss. Ein Beispiel hierfür ist der Profibus gemäß der Norm IEC 61158 sowie IEC 61784. Der Profibus verfügt über maximal 253 Adressen, von denen einige reserviert sind. Über die verbleibenden Adressen lassen sich Teilnehmervorrichtungen ansprechen. Der Profibus wird vielfach im industriellen Bereich für Automatisierungssysteme mit dezentraler Peripherie eingesetzt.

Teilnehmervorrichtungen für ein Profibus-System verfügen über eine Profibus-Schnittstelle, eine Platine, auch Backplane genannt, sowie mitunter auch über Anschlüsse für Eingabe-/Ausgabekarten. Die Teilnehmervorrichtung kann aufgrund einer Standardisierung bzw. einer Beschränkung aus der Profibus-Norm maximal 16 Adressen beanspruchen.

Der für jede Teilnehmervorrichtung verfügbare Adressraum von 16 Adressen ist in der Regel ausreichend, wenn über die Eingabe-/Ausgabemodule konventionelle Baugruppen angeschlossen werden, da in diesem Fall der Adressraumbedarf für die einzelne Eingabe-/Ausgabekarte begrenzt ist. Aus diesem Grund lassen sich in der Regel an eine Teilnehmervorrichtung mehrere E/A-Karten (Eingabe-/Ausgabekarten) anschließen, die sich den verfügbaren Adressraum untereinander aufteilen.

Soll bei einem Automatisierungssystem ein komplexes Funktionsmodul gesteuert werden, so wird dieses über eine E/A-Karte an die Teilnehmervorrichtung angeschlossen und erfordert hierbei einen Adressraum, der gegebenenfalls so groß ist wie der Adressraum der gesamten Teilnehmervorrichtung. Je nach Komplexität des Funktionsmoduls ist daher eine Anschlussmöglichkeit an die Teilnehmervorrichtung möglicherweise nicht mehr gegeben, insbesondere wenn sich die E/A-Karte, an der das komplexe Funktionsmodul angeschlossen ist, Adressen mit anderen E/A-Karten teilen muss.

Aus den vorstehenden Ausführungen wird ersichtlich, dass sich Anschlussprobleme zeigen, wenn einer Teilnehmervorrichtung nur ein begrenzter Adressraum zur Verfügung steht. Diese Beschränkung des Adressraumes kann sich hierbei, wie beim Profibus, aufgrund einer Norm ergeben.

Zur Lösung dieses Problems wurde vorgeschlagen, die Teilnehmervorrichtung jeweils mit einer Adresse auszustatten und die von den E/A-Modulen herrührenden E/A-Werte auf Register der Teilnehmervorrichtung abzubilden. Dies erfordert eine komplexe Software, um ein Registerabbild vorzunehmen. Soll beispielsweise eine Soll-Drehzahl eines an einer E/A-Karte angeschlossenen Elektromotors festgelegt werden, so wird zunächst diese Drehzahl in das Register der Teilnehmervorrichtung geschrieben und wird dann vom Register zu einem Dual-Port RAM des E/A-Moduls übertragen. Von dort wird der Soll-Wert zum Elektromotor übertragen. Entsprechend gilt der umgekehrte Weg für das Auslesen der Ist-Werte der Drehzahl dieses Elektromotors. Diese Architektur findet sich beispielsweise bei Mehrmotorenantrieben, bei denen die einzelnen Antriebsgeräte über den Profibus in einer Kette oder in mehreren Strängen verbunden sind.

Ein weiterer bekannter Ansatz zur Lösung des oben genannten Problems besteht darin, jede Teilnehmervorrichtung mit einem separaten, d. h. vom Profibus unterschiedlichen Adress- und Datenbus auszustatten. An diesem Adress- und Datenbus der Teilnehmervorrichtung sind dann ihre E/A-Karten angeschlossen. Dadurch wird der Adressraum der einzelnen Teilnehmervorrichtungen vervielfacht, wobei der Adressraum fix auf die Steckplätze verteilt ist. D. h., dass für einen Steckplatz, an dem eine E/A-Karte angeschlossen ist, stets eine oder mehrere Adressen reserviert sind, und zwar auch dann, wenn tatsächlich keine E/A-Karte angeschlossen ist.

Die US 5, 978, 578 beschreibt ein Feldbus-System, an das E/A-Karten angeschlossen sind. E/A-Vorrichtungen wie Sensoren, Motoren, Monitore, Maschinen etc. sind an eine E/A-Karte angeschlossen, die über einen Kontrollbus verfügt. Der Kontrollbus ist derart ausgelegt, dass Geräte mit einem ISA-, PCI- oder Compact-PCI-Bus oder einem anderen Bus angeschlossen werden können.

### Darstellung der Erfindung

Ausgehend vom oben genannten Stand der Technik ist es die Aufgabe der Erfindung, bei einem seriellen Bussystem, bei dem die Teilnehmervorrichtungen nur über einen begrenzten Adressraum verfügen können und bei dem an die jeweilige Teilnehmervorrichtung mehrere Eingabe-/Ausgabekarten anschließbar sind, die sich den Adressraum der Teilnehmervorrichtung untereinander aufteilen müssen, die Adressraumbeschränkungen für die Eingabe-/Ausgabekarte auf eine einfache Weise zu lösen.

Die Lösung dieser Aufgabe erfolgt mit den Merkmalen der unabhängigen Ansprüche. Vorteilhafte Weiterbildungen werden durch die Merkmale der Unteransprüche wiedergegeben.

In einem ersten Aspekt der Erfindung wird vorgeschlagen, eine Teilnehmervorrichtung für ein serielles Bussystem mit einer Platine, auch Rückwandplatine genannt, auszustatten. Die Rückwandplatine besitzt Datenleitungen für den Anschluss an eine vordere und eine hintere Teilnehmervorrichtung im seriellen Bussystem sowie Steckplätze für Eingabe-/Ausgabekarten. Zusätzlich besitzt die Rückwandplatine einen Verteiler zum Duplizieren eines empfangenen Bussignals und zum Einkoppeln des duplizierten Bussignals in eine weitere Datenleitung. Die weitere Datenleitung verbindet die Teilnehmervorrichtung seriell mit den über die Steckplätze angeschlossenen Eingabe-/Ausgabekarten.

Die Idee der Erfindung besteht insofern darin, dass die Teilnehmervorrichtung weiterhin im originären seriellen Bussystem verbleibt und das Bussystem mit einem linearen Nebenstrang zu versehen, an dem die Eingabe-/Ausgabekarten seriell angebunden sind. Die Teilnehmervorrichtung ist mit den an ihr angeschlossenen E/A-Karten seriell verbunden, so dass die Teilnehmervorrichtung insofern als ein Hub für die E/A-Karten anzusehen ist.

Der Vorteil dieses Vorschlags ist darin zu sehen, dass die E/A-Karten selbst vollwertige Teilnehmer des seriellen Bussystems mit eigener Busadresse werden. Damit müssen sich die E/A-Karten, die an einer Teilnehmervorrichtung angeschlossen sind, nicht mehr den Adressraum dieser Teilnehmervorrichtung untereinander aufteilen. Dies bringt es auch mit sich, dass der Adressraum aller an der Teilnehmervorrichtung angeschlossenen E/A-Karten größer sein kann, als der Adressraum der einzelnen Teilnehmervorrichtung selbst.

Ein weiterer Vorteil ist darin zu sehen, dass die Lösung eine baulich besonders einfach ausgebildete Teilnehmervorrichtung erlaubt. Die Teilnehmervorrichtungen können damit gegenüber bekannten Teilnehmervorrichtungen vereinfacht werden, so dass sie weniger Bauteile und eine weniger komplexe Firmware benötigen. Die Teilnehmervorrichtung benötigt weder einen separaten Adress- und Datenbus noch eine Registerabbildfunktionalität, bei der die E/A-Werte von Geräten, die über eine E/A-Karte in das Bussystem ein- bzw. ausgekoppelt werden sollen, über Register zwischengespeichert werden müssen. Die Logik der Platine ist insofern erheblich vereinfacht, was die Platine preiswerter werden lässt und auch weniger störanfällig.

In einer bevorzugten Ausführungsform der Erfindung handelt es sich bei dem seriellen Bussystem um ein Profibus-System oder ein.Profinet-System. Der Profibus gemäß der Normen IEC 61158 sowie IEC 61784 ist ein Beispiel mit beschränktem Adressraum: es gibt Profibus-Adressen 0 bis 253, wobei die Adressen 0, 1 und 2 reserviert sind, so dass der Adressraum insgesamt beschränkt ist. Pro Teilnehmervorrichtung sind maximal 16 Profibus-Adressen erlaubt.

Die Rückwandplatine koppelt vom seriellen Bussystem kommende Datentelegramme aus und leitet sie in die weitere Datenleitung ein. Der Auskoppelvorgang sollte den Signalpegel nicht verändern und sollte nicht zu Signalverzögerungen im seriellen Bussystem führen. Bevorzugterweise ist dem Verteiler mindestens ein Signalverstärker (Auskoppelverstärker) zugeordnet. Zusätzlich kann für die Auskopplung ein Signalformer, z. B. in Form eines Chips, vorgesehen sein, um das richtige Signalprofil bei gegebenenfalls angepasster Taktung in der weiteren Datenleitung sicherzustellen und um Störsignale zu unterdrücken.

Umgekehrt koppelt die Rückwandplatine von der weiteren Datenleitung kommende Datentelegramme in das serielle Bussystem ein. Wie beim entsprechenden Fall des Auskoppelns können dem Verteiler ein Signalverstärker (Einkoppelverstärker) und ein Signalformer, letzterer z. B. in Form eines Chips, zugeordnet sein.

Bei den Teilnehmervorrichtungen handelt es sich bevorzugt um Systemkomponenten eines Automatisierungssystems und insbesondere eines Prozessleitsystems oder eines Kraftwerkleitsystems. An den Teilnehmervorrichtungen können dann über E/A-Karten Antriebsgeräte angeschlossen sein, z. B. Niederspannungsumrichter, wie der seitens der Anmelderin vertriebene MicroMaster oder aber der ebenfalls von der Anmelderin vertriebene MasterDrive zur Regelung drehzahlveränderbarer Antriebe. Weiterhin können an die Teilnehmervorrichtungen über E/A-Karten Reglerbaugruppen oder allgemein Multifunktionsbaugruppen angeschlossen sein, so Highspeed-Digitaleingabe-Baugruppen mit Zeitstempel, Baugruppen mit binären Ein- und Ausgängen zum Ein- und Ausschalten von Motoren oder Baugruppen mit binären und analogen Ein- und Ausgängen, letztere beispielsweise für Regelkreise.

Bei einem seriellen Bussystem, das mindestens über eine der vorstehend genannten Teilnehmervorrichtungen verfügt, ist bevorzugterweise jeder angeschlossenen Eingabe-/Ausgabekarte eine Busadresse zugeordnet. Für nicht angeschlossene Eingabe-/Ausgabekarten ist jedoch keine Busadresse vorgehalten. Dies bedeutet, dass nur die tatsächlich angeschlossenen Eingabe-/Ausgabekarten eine Busadresse im Bussystem, z. B. Profibus-System, zugeordnet bekommen.

Die Eingabe-/Ausgabekarten, die mit erfindungsgemäßen Teilnehmervorrichtungen im Bussystem zusammenwirken sollen, sind gegenüber dem Stand der Technik modifiziert und verfügen über eine Busschnittstelle, damit sie als eigenständige Teilnehmervorrichtung in ein serielles Bussystem einbindbar sind. Diese Busschnittstelle kann beispielsweise eine Profibus- oder Profinet-Busschnittstelle sein. Auch wenn durch das Erfordernis einer Busschnittstelle die bestehenden digitalen Eingabe-/Ausgabekarten komplexer werden, werden solche Karten an anderer Stelle vereinfacht, da sie nunmehr keinen Dual-Port RAM mehr benötigen. Die Eingabe-/Ausgabekarte hat weiterhin einen Steckverbinder und Einkoppelmittel zur Anbindung an das Bussystem. Ein Prozessor für die Datenverarbeitung legt nun Daten, z. B. den Ist-Wert einer Stellgröße, nicht mehr im RAM ab, sondern liefert die Daten direkt an die vorgenannte Schnittstelle und macht sie damit für die Teilnehmervorrichtungen des seriellen Bussystems allgemein verfügbar.

Die Rückwandplatine kann ferner ausgebildet sein, die Stromversorgung für die Steckplätze bereitzustellen. Damit wird für die Steckplätze ein separater Baugruppenträger entbehrlich.

Weitere Merkmale und Vorteile der Erfindung werden aus der folgenden detaillierten Beschreibung mit Bezug auf die beigefügten Zeichnungen erkennbar, die nachfolgend als nicht beschränkende Beispiele angegeben sind. Es stellt dar:
- Figur 1: ein serielles Bussystem in schematischer Darstellung,
- Figur 2: schematisch eine Teilnehmervorrichtung des Bussystems,
- Figur 3: eine Platine der Teilnehmervorrichtung,
- Figur 4: eine Eingabe-/Ausgabekarte.

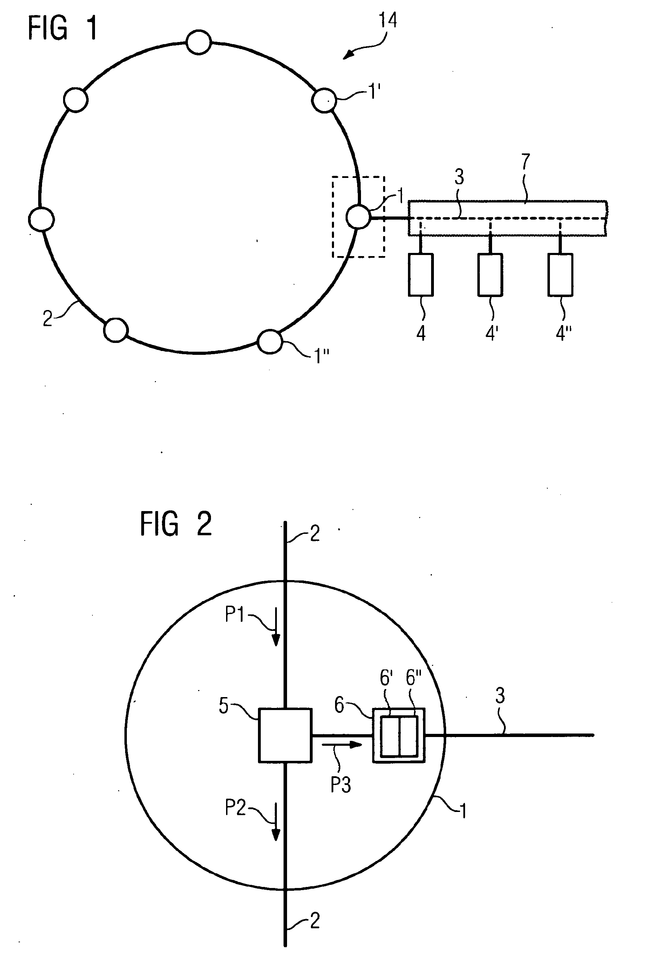

Figur 1 zeigt Komponenten 1, 1', 1" eines Automatisierungssystems, die über Datenleitungen 2 eines Profibusses zusammengeschaltet sind. Die Busteilnehmer sind in einer Ringtopologie angeordnet, wobei die Teilnehmervorrichtung 1 für ein im Uhrzeigersinn laufendes Datentelegramm eine vordere Teilnehmervorrichtung 1' und eine hintere Teilnehmervorrichtung 1" hat. Anstelle der Ringtopologie kann auch eine serielle Anordnung bzw. Strangtopologie mit einem geeigneten Abschlusswiderstand gewählt werden.

Ausgehend von der Teilnehmervorrichtung 1 gibt es ferner einen linearen Nebenstrang in Form einer weiteren Datenleitung 3. An diese weitere Datenleitung 3 sind E/A-Karten 4, 4', 4" seriell angekoppelt.

Figur 2 zeigt eine Teilnehmervorrichtung in schematischer Form. Die Teilnehmervorrichtung 1 besitzt einen Verteiler bzw. Hub 5 zum Duplizieren von Bussignalen. Gelangt ein Datentelegramm von der Teilnehmervorrichtung 1' über die Datenleitung 2 zur Teilnehmervorrichtung 1 gemäß Pfeil P1, so wird dieses nicht nur gemäß Pfeil P2 in Richtung der Teilnehmervorrichtung 1" weitergeleitet, sondern im Verteiler 5 dupliziert und gemäß Pfeil P3 in Richtung des Moduls 6 in die weitere Datenleitung 3 eingekoppelt. Das Modul 6 hat die Funktionalität eines Repeaters, d. h., er verstärkt nicht nur das eingehende Signal, sondern regeneriert es auch. Zur Regenerierung gehört die Signalformung und die Signalneutaktung. Das Modul 6 umfasst damit sowohl einen Verstärker 6' als auch einen Signalformer 6".

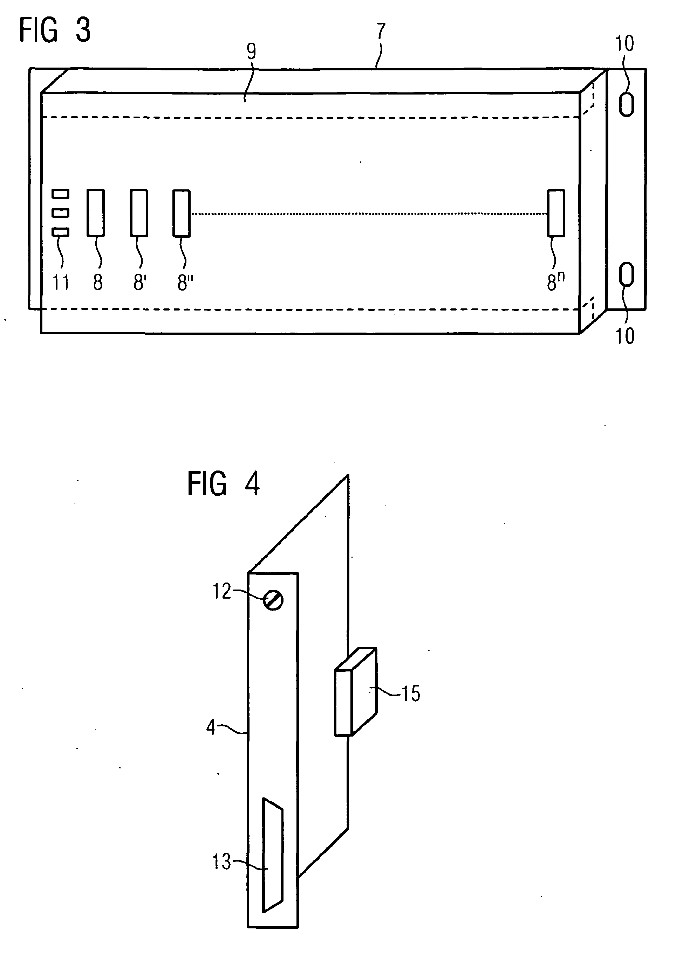

Figur 3 zeigt eine Platine der Teilnehmervorrichtung, im Stand der Technik mitunter auch als Rückwandplatine bezeichnet. Jede Teilnehmervorrichtung 1, 1', 1" des Bussystems 1 der Figur 1 hat eine solche Platine 7, wie in Figur 3 gezeigt. Diese schematisch dargestellte Platine 7 verfügt über Steckplätze 8, 8', 8" bis 8ⁿ zum Anschluss an jeweils eine (nicht gezeigte) Steckkarte. n ist eine natürliche Zahl und kann z. B. 15 oder 16 sein. Bei den Steckkarten handelt es sich, wie unten noch im Detail erläutert, um Eingabe-/Ausgabekarten zur Steuerung und/oder Regelung von elektrischen Komponenten. Im Betrieb bilden daher die Platine 7 und die Steckkarten 4, 4', 4" eine kompakte Einheit.

Die Platine 7 ist über eine Arretierung 9 an eine nicht gezeigte Halterung angebracht. Zusätzlich ist eine Verschraubung über die Schraubenöffnungen 10 möglich. Ein elektrischer Anschluss 11 für die Stromversorgung ergänzt die Platine 7.

Jede Eingabe-/Ausgabekarte 4, 4', 4" ist direkt mit der Datenleitung 3 verbunden, vgl. Figur 1. Durch einfaches Einstecken der Eingabe-/Ausgabekarte in die Platine wird diese Karte in das Bussystem integriert. Korrespondierend hierzu wird durch einfaches Herausziehen der Eingabe-/Ausgabekarte diese aus dem Bussystem entfernt. Durch die in Figur 1 gezeigte Verbindung der Eingabe-/Ausgabekarten 4, 4', 4" an die jeweils weitere Datenleitung 3 ist sichergestellt, dass nur tatsächlich angeschlossene Eingabe-/Ausgabekarten Teilnehmervorrichtungen des Bussystems 1 mit eigener Busadresse sind. Nicht belegte Steckplätze benötigen daher keine Adresse im Bussystem. Alle Eingabe-/Ausgabekarten sind gleichberechtigte Teilnehmer des Bussystems, so dass sich die über die Steckplätze 8, 8', 8" bis 8ⁿ angeschlossenen Eingabe-/Ausgabekarten nicht den Adressraum einer Teilnehmervorrichtung mit der Platine 7 teilen müssen.

Die Figur 4 zeigt eine Eingabe-/Ausgabekarte 4, die über einen Stecker 15 mit einem Steckplatz 8 der Platine 7 verbunden ist. Weiterhin ist die Eingabe-/Ausgabekarte 4 mittels einer Verschraubung 12 an der Platine befestigbar. Der Stecker 15 dient hierbei zum einen der Stromversorgung der Eingabe-/Ausgabekarte, zusätzlich aber auch für die Bussignale von der Eingabe-/Ausgabekarte zur Teilnehmervorrichtung. Die Eingabe-/Ausgabekarte 4 verfügt zusätzlich über eine Baugruppe 13 mit Busanschluss, Prozesssignalanschluss und einer Verarbeitungseinheit, mit der externe Geräte gesteuert und/oder geregelt werden können.

## Patentansprüche

1. Teilnehmervorrichtung (1) eines seriellen Bussystems (14) mit einer Rückwandplatine (7), die Datenleitungen (2) für den Anschluss der Teilnehmervorrichtung (1) an eine vordere und eine hintere Teilnehmervorrichtung (1', 1") im seriellen Bussystem (14) und Steckplätze (8, 8', 8" bis 8ⁿ) für Eingabe-/Ausgabekarten (4, 4', 4") aufweist, **gekennzeichnet durch** zusätzlich einen Verteiler (5) zum Duplizieren eines empfangenen Bussignals und zum Einkoppeln des duplizierten Bussignals in eine weitere Datenleitung (3), wobei die weitere Datenleitung die Teilnehmervorrichtung (1) mit über die Steckplätze anschließbaren Eingabe-/Ausgabekarten seriell verbindet.

2. Teilnehmervorrichtung nach Anspruch 1, **dadurch gekennzeichnet, dass** es sich bei dem seriellen Bussystem um ein Profibus-System oder ein Profinet-System handelt.

3. Teilnehmervorrichtung nach Anspruch 1 oder 2, **dadurch gekennzeichnet, dass** der Verteiler mindestens einen Signalverstärker (6') und mindestens einen Signalformer (6") für in die weitere Datenleitung einzukoppelnde Datentelegramme besitzt.

4. Teilnehmervorrichtung nach einem der Ansprüche 1 bis 3, **dadurch gekennzeichnet, dass** der Verteiler mindestens einen Signalverstärker (6') und mindestens einen Signalformer (6") für von der weiteren Datenleitung in das serielle Bussystem einzukoppelnde Datentelegramme besitzt.

5. Teilnehmervorrichtung nach einem der Ansprüche 1 bis 4, **dadurch gekennzeichnet, dass** es sich bei den Teilnehmervorrichtungen um Systemkomponenten eines Automatisierungssystems und insbesondere eines Prozessleitsystems oder eines Kraftwerkleitsystems handelt.

6. Serielles Bussystem, insbesondere Profibus- oder Profinet-System, **gekennzeichnet durch** mindestens eine Teilnehmervorrichtung (1, 1', 1") nach einem der Ansprüche 1 bis 5.

7. Serielles Bussystem nach Anspruch 6, **dadurch gekennzeichnet, dass** jeder angeschlossenen Eingabe-/Ausgabekarte (4, 4', 4") eine Busadresse zugeordnet ist und für nicht angeschlossene Eingabe-/Ausgabekarten keine Busadresse vorgehalten ist.

8. Digitale Eingabe-/Ausgabekarte für die Steuerung oder Regelung von Geräten eines Automatisierungssystems, mit einer Busschnittstelle (15) zur Einbindung als Teilnehmervorrichtung (1, 1', 1") in ein serielles Bussystem nach Anspruch 6 oder 7.

9. Eingabe-/Ausgabekarte nach Anspruch 8, **dadurch gekennzeichnet, dass** es sich bei der Busschnittstelle um eine Profibus- oder Profinet-Schnittstelle handelt.

## Claims

1. Node device (1) of a serial bus system (14) having a backplane (7), comprising data lines (2) for connecting the node device (1) to a front and a rear node device (1', 1") in the serial bus system (14), and slots (8, 8', 8" to 8ⁿ) for input/output cards (4, 4', 4"), characterised additionally by a splitter (5) to duplicate a received bus signal and to inject the duplicated bus signal into a further data line (3), wherein the further data line serially connects the node device (1) to input/output cards which can be connected via the slots.

2. Node device according to claim 1, **characterised in that** the serial bus system is a Profibus system or a Profinet system.

3. Node device according to claim 1 or claim 2, **characterised in that** the splitter has at least one signal amplifier (6') and at least one signal shaper (6") for data telegrams that are to be injected into the further data line.

4. Node device according to one of claims 1 to 3, **characterised in that** the splitter has at least one signal amplifier (6') and at least one signal shaper (6") for data telegrams that are to be injected from the further data line into the serial bus system.

5. Node device according to one of claims 1 to 4, **characterised in that** the node devices are system components of an automation system and in particular of a process control system or of a power station control system.

6. Serial bus system, in particular a Profibus or Profinet system, **characterised by** at least one node device (1, 1', 1") according to one of claims 1 to 5.

7. Serial bus system according to claim 6, **characterised in that** a bus address is assigned to each connected input/output card (4, 4', 4") and no bus address is reserved for input/output cards that are not connected.

8. Digital input/output card to control or regulate devices in an automation system, comprising a bus node (15) for incorporation as a node device (1, 1', 1") into a serial bus system according to claim 6 or claim 7.

9. Input/output card according to claim 8, **characterised in that** the bus node is a Profibus or Profinet node.

## Revendications

1. Dispositif ( 1 ) de participant d'un système ( 14 ) de bus sériel, comprenant un fond de panier ( 7 ), qui a des lignes ( 2 ) de données pour le raccordement du dispositif ( 1 ) de participant à un dispositif ( 1') de participant avant et à un dispositif ( 1") de participant arrière, dans le système ( 14 ) de bus sériel, et des emplacements ( 8, 8', 8" jusqu'à 8ⁿ ) pour des cartes ( 4, 4', 4" ) d'entrée/sortie, **caractérisé par** supplémentairement un répartiteur ( 5 ) pour dupliquer un signal de bus reçu et pour injecter le signal de bus reçu dans une autre ligne ( 3 ) de données, l'autre ligne de données reliant de manière sérielle le dispositif ( 1 ) de participant à des cartes d'entrée/sortie pouvant être raccordées par les emplacements.

2. Dispositif de participant suivant la revendication 1, **caractérisé en ce que** le bus sériel est un système profibus ou un système profinet.

3. Dispositif de participant suivant la revendication 1 ou 2, **caractérisé en ce que** le répartiteur a au moins un amplificateur ( 6' ) du signal et au moins un formeur ( 6" ) du signal pour des télégrammes de données à injecter dans l'autre ligne de données.

4. Dispositif de participant suivant l'une des revendications 1 à 3, **caractérisé en ce que** le répartiteur a au moins un amplificateur ( 6' ) du signal et au moins un formeur ( 6" ) du signal pour des télégrammes de données à injecter de l'autre ligne de données dans le système de bus sériel.

5. Dispositif de participant suivant l'une des revendications 1 à 4, dans lequel les dispositifs de participant sont des composants d'un système d'automatisation et notamment d'un système de conduite de processus ou d'un système de conduite de centrale électrique.

6. Système de bus sériel, notamment système profibus ou profinet, **caractérisé par** au moins un dispositif (1, 1', 1" ) de participant suivant l'une des revendications 1 à 5.

7. Système de bus sériel suivant la revendication 6, **caractérisé en ce qu'**une adresse de bus est affectée à chaque carte ( 4, 4', 4" ) d'entrée/sortie raccordée et une adresse de bus n'est pas tenue pour des cartes d'entrée/sortie qui ne sont pas raccordées.

8. Carte numérique d'entrée/sortie pour la commande ou la régulation d'appareil d'un système d'automatisation, comprenant une interface ( 15 ) de bus pour la liaison en tant que dispositif ( 1, 1', 1" ) de participant dans un système de bus sériel suivant la revendication 6 ou 7.

9. Carte d'entrée/sortie suivant la revendication 8, **caractérisée en ce que** l'interface de bus est une interface profibus ou profinet.
